# EUROPÄISCHE PATENTANMELDUNG

(11) **EP 4 775 937 A1**
(43) Veröffentlichungstag der Anmeldung: **15.07.2026**
(21) Anmeldenummer: 25223926.4
(22) Anmeldetag: 16.12.2025
(51) Int. Cl.: G01H 1/00, G07C 9/00, G07F 17/12

(54) **VORRICHTUNG ZUM BEREITSTELLEN VON ABNUTZUNGSINFORMATION**

(30) Priorität: 09.01.2025 DE 102025100537
(71) Anmelder: Deutsche Post AG, 53113 Bonn (DE)
(72) Erfinder: Kamb, Dennis, Rösrath (DE); Nägel, Ulf, Prüm (DE); Franke, Christian-Jochum, Bonn (DE)
(74) Vertreter: Cohausz & Florack

(57) **Zusammenfassung**

Es wird unter anderem ein Verfahren offenbart, wobei das Verfahren umfasst:
- Erhalten einer Information, die zumindest einen Wert zumindest eines Messparameters repräsentiert, wobei der zumindest eine Messparameter geeignet ist, einen Abnutzungsgrad zumindest einer Komponente einer Fachanlage zu charakterisieren;
- Bereitstellen, zumindest teilweise basierend auf dem zumindest einen Wert des zumindest einen Messparameters, und zumindest teilweise basierend auf zumindest einem entsprechenden Referenzwert, der für den zumindest einen Messparameter einem Sollzustand der zumindest einen Komponente der Fachanlage entspricht, von Abnutzungsinformation, die eine Bewertung des Abnutzungsgrades der zumindest einen Komponente der Fachanlage repräsentiert.

## Beschreibung

### Technisches Gebiet

Beispielhafte Ausführungsformen der vorliegenden Offenbarung betreffen Verfahren, Vorrichtungen und Computerprogramme zum Bereitstellen von Abnutzungsinformation, die einen Abnutzungsgrad von zumindest einer Komponente einer Fachanlage repräsentiert.

### Hintergrund

Fachanlagen finden beispielsweise in Form von Schließfach- oder Paketfachanlagen vielfältig Anwendung. Ein Beispiel für eine Fachanlage ist zum Beispiel eine Paketstation, wie beispielsweise die Packstation der Anmelderin, welche ein Benutzer zum Empfangen oder Versenden von Postsendungen verwenden kann. Ein solches Versenden umfasst üblicherweise das Einlagern einer zu versendenden Sendung in die Fachanlage, wobei der Benutzer zum Beispiel die Sendung in ein Fach der Fachanlage einlegt und das Fach anschließend schließt. Entsprechend kann ein Nutzer zum Empfangen einer Postsendung diese einem Fach entnehmen, wobei der Benutzer das Fach nach dem Entnehmen ebenfalls schließt. Typischerweise umfasst eine Fachanlage eine Steuervorrichtung, die beispielsweise einerseits eine Kommunikation mit dem Benutzer hinsichtlich der Sendungen, beispielsweise über ein Display und Bedienelemente wie Tasten und/oder ein Touchdisplay ermöglicht. Andererseits kann die Steuerungsvorrichtung auch eine Steuerung, beispielsweise zum Öffnen von Fächern ermöglichen.

Bei der beschriebenen Verwendung einer Fachanlage kann es nachteilig sein, dass insbesondere bewegliche Bauteile oder Baugruppen der Fachanlage, beispielsweise Türen, Scharniere und/oder Schließmechanismen der Fächer kontinuierlich von unterschiedlichen Benutzern verwendet werden und durch die Verwendung einem Verschleiß ausgesetzt sind.

### Zusammenfassung einiger beispielhafter Ausführungsformen der Erfindung

Die vorliegend offenbarte Erfindung hat sich daher unter anderem die Aufgabe gestellt, es zu vereinfachen, dass Verschleiß an beweglichen Komponenten einer Fachanlage frühzeitig und verlässlich festgestellt werden kann.

Gemäß einem beispielhaften Aspekt der vorliegenden Offenbarung wird ein Verfahren offenbart, das Folgendes umfasst:
- Erhalten einer Information, die zumindest einen Wert zumindest eines Messparameters repräsentiert, wobei der zumindest eine Messparameter geeignet ist, einen Abnutzungsgrad zumindest einer Komponente einer Fachanlage zu charakterisieren;
- Bereitstellen, zumindest teilweise basierend auf dem zumindest einen Wert des zumindest einen Messparameters, und zumindest teilweise basierend auf zumindest einem entsprechenden Referenzwert, der für den zumindest einen Messparameter einem Sollzustand der zumindest einen Komponente der Fachanlage entspricht, von Abnutzungsinformation, die eine Bewertung des Abnutzungsgrades der zumindest einen Komponente der Fachanlage repräsentiert.

Zum Beispiel kann das Verfahren gemäß diesem Aspekt zumindest teilweise oder vollständig von einer Steuervorrichtung einer Fachanlage oder von einem Backend-Server durchgeführt werden.

Gemäß dem genannten Aspekt der vorliegenden Offenbarung werden des Weiteren offenbart:
- Ein Computerprogramm, umfassend Programmanweisungen, die einen Prozessor zur Ausführung und/oder Steuerung des Verfahrens gemäß dem genannten Aspekt der Erfindung veranlassen, wenn das Computerprogramm auf dem Prozessor läuft. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.
- Eine Vorrichtung, eingerichtet zur Ausführung und/oder Steuerung des Verfahrens gemäß dem genannten Aspekt der Erfindung oder umfassend jeweilige Mittel zur Ausführung und/oder Steuerung der Schritte des Verfahrens gemäß dem genannten Aspekt der Erfindung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem genannten Aspekt der Erfindung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Im Folgenden werden beispielhafte Ausführungsformen des genannten Aspekts der vorliegenden Erfindung beispielhaft beschrieben.

Gemäß dem genannten Aspekt wird das Verfahren durch zumindest eine Vorrichtung durchgeführt. Mit anderen Worten kann das Verfahren ganz oder teilweise durch eine Vorrichtung, beispielsweise durch eine Steuervorrichtung einer Fachanlage, durchgeführt werden. Dazu ist die Steuervorrichtung in beispielhaften Ausführungsformen eingerichtet, zumindest Schritte des Verfahrens gemäß dem genannten Aspekt durchzuführen.

Das Verfahren kann ferner ganz oder teilweise beispielsweise durch einen Backend-Server durchgeführt werden, der mit der Steuervorrichtung einer Fachanlage, beispielsweise durch Fernkommunikationsmittel (z.B. eine drahtlose und/oder drahtgebundene Internetverbindung) verbunden ist, durchgeführt werden. Dazu ist der Backend-Server in beispielhaften Ausführungsformen eingerichtet, zumindest Schritte des Verfahrens gemäß dem genannten Aspekt durchzuführen.

Das Verfahren kann ferner ganz oder teilweise beispielsweise durch ein Mobilgerät (z.B. durch ein Smartphone, einen Handscanner, einen Laptop, ein Tabletcomputer, etc.) durchgeführt werden, das mit der Steuervorrichtung einer Fachanlage, beispielsweise durch Fernkommunikationsmittel (z.B. eine drahtlose und/oder drahtgebundene Internetverbindung), insbesondere über den Backend-Server, verbunden ist, durchgeführt werden. Dazu ist das Mobilgerät in beispielhaften Ausführungsformen eingerichtet, zumindest Schritte des Verfahrens gemäß dem genannten Aspekt durchzuführen. Dies wird im Folgenden genauer erläutert.

Die Steuervorrichtung kann zum Steuern zumindest von Schritten des Verfahrens gemäß dem genannten Aspekt eingerichtet sein, sie kann weiter aber auch zum Steuern weiterer Prozesse der Fachanlage eingerichtet sein. Beispielsweise kann die Steuervorrichtung eingerichtet sein, Kommunikation mit einem Benutzer der Fachanlage über ein mit der Fachanlage verbundenes Display und Bedienelemente wie Tasten und/oder über ein Touchdisplay zu steuern. Hierbei kann das Touchdisplay ganz oder teilweise dem mit der Fachanlage verbundenen Display entsprechen. So kann die Steuervorrichtung in einer beispielhaften Ausführungsform eingerichtet sein, einen Kommunikationsvorgang mit einem Benutzer derart zu steuern (beispielsweise durch Bereitstellen geeigneter Informationen auf dem Display), dass ein Benutzer angeben kann (beispielsweise über von der Steuervorrichtung vorgegebene Elemente auf dem Touchdisplay), dass eine bestimmte Postsendung abgeholt werden soll. Beispielsweise nach geeigneter Identifizierung des Benutzers kann die Steuervorrichtung in einer beispielhaften Ausführungsform eingerichtet sein, das Fach einer Mehrzahl von Fächern der Fachanlage zu öffnen, welches die vom Benutzer gewünschte Sendung enthält.

Auch kann die Steuervorrichtung in einer beispielhaften Ausführungsform eingerichtet sein, einen Drucker der Fachanlage zu steuern. Dieser kann beispielsweise von der Steuervorrichtung gesteuert werden, einem Benutzer, der eine Sendung zum Versandt in ein Fach der Fachanlage eingelegt hat, eine entsprechende Quittung auszudrucken. Weiter kann die Steuervorrichtung in beispielhaften Ausführungsformen eingerichtet sein, einen oder mehrere Lüfter zu steuern (z.B. ein- oder auszuschalten), die von der Fachanlage umfasst sind. So kann beispielsweise eine Temperatur und/oder eine Luftfeuchtigkeit im Innern der Fachanlage geeignet gesteuert werden.

Mit Bezug auf den genannten Aspekt der vorliegenden Erfindung umfasst das Verfahren ein Erhalten einer Information, die zumindest einen Wert zumindest eines Messparameters repräsentiert, wobei der zumindest eine Messparameter geeignet ist, einen (z.B. aktuellen) Abnutzungsgrad zumindest einer Komponente, beispielsweise einer beweglichen Komponente, einer Fachanlage zu charakterisieren.

Dabei ist im Zusammenhang mit der vorliegenden Offenbarung der Begriff "Information, die einen Wert repräsentiert" so zu verstehen, dass der Wert in geeigneter Weise vorliegt, so dass er von der zumindest einen Vorrichtung, die das Verfahren gemäß dem genannten Aspekt zumindest teilweise ausführt, verarbeitet werden kann. Es kann sich bei der Information somit beispielsweise um eine geeignete Darstellung des Wertes handeln, die von der Vorrichtung verarbeitet werden kann. Erhalten einer Information, die zumindest einen Wert zumindest eines Messparameters repräsentiert, ist somit beispielsweise zu verstehen als Erhalten einer Darstellung des Wertes des zumindest einen Messparameters, die von der das Verfahren durchführenden zumindest einen Vorrichtung verarbeitet werden kann.

Der zumindest eine Messparameter ist geeignet, einen Abnutzungsgrad zumindest einer Komponente, beispielsweise einer beweglichen Komponente, einer Fachanlage zu charakterisieren. Mit anderen Worten kann, wie später beschrieben, zumindest teilweise basierend auf einem oder mehreren Messwerten des Messparameters und zumindest teilweise basierend auf dem Referenzwert ein Abnutzungsgrad der zumindest einen Komponente bewertet werden (z.B. "noch wie neu", "etwas abgenutzt", "stärker abgenutzt", "muss gewartet werden", "muss ausgetauscht werden", etc.).

Wie später hierin genauer erläutert, kann es sich bei dem Messparameter in einer beispielhaften Ausführungsform insbesondere um einen Parameter handeln, der einen durch eine Bewegung einer Komponente der Fachanlage ausgelösten Klang repräsentiert. So kann der Parameter beispielsweise einer Amplitude des Klangs bei einer bestimmten Frequenz handeln, der für einen bestimmten Vorgang, charakteristisch ist. Der zumindest eine Messparameter kann beispielsweise einem Audio-Frequenzspektrum entsprechen, beispielsweise des Klangs oder Geräusch, das durch ein Schließen oder Öffnen eines Fachs der Fachanlage entsteht. Dieser Klang oder dieses Geräusch kann durch die beweglichen Komponenten, insbesondere beispielsweise durch Scharnierkomponenten und/oder Komponenten eines Schließmechanismus (z.B. Fachschloss) des Fachs beim Öffnen oder Schließen des Fachs entstehen. Somit kann in einer beispielhaften Ausführungsform das Erhalten der Information, die den zumindest einen Wert des zumindest eines Messparameters repräsentiert ein Aufnehmen oder Messen eines Frequenzspektrums eines Klangs umfassen, der durch eine Bewegung der zumindest einen Komponente ausgelöst wird. Es hat sich herausgestellt, dass sich beispielsweise ein solches Audio-Frequenzspektrum durch eine kontinuierliche Benutzung von entsprechenden Komponenten der Fachanlage, beispielsweise von Komponenten zum Öffnen und/oder Schließen eines Fachs in Abhängigkeit eines Abnutzungsgrades ändern kann. So hat es sich herausgestellt, dass eine messbare Änderung des Audio-Frequenzspektrums im Vergleich zu einem Audio-Frequenzspektrum, das in einem Ausgangszustand der Fachanlage gemessen wurde (dieses Audio-Frequenzspektrum ist ein Beispiel für den zumindest einen Referenzwert), auf eine Beschädigung einer Komponente der Fachanlage, beispielsweise einer Komponente, die an einem Öffnen und/oder Schließen eines Fachs beteiligt ist, hindeuten kann. Es hat sich somit herausgestellt, dass es basierend auf einer Messung geeigneter Messparameter bei der Benutzung der Fachanlage, beispielsweise basierend auf einer Messung eines solchen Audio-Frequenzspektrums eines Klangs und/oder einem entsprechenden Schwingungsverhalten, möglich ist, Veränderungen an Komponenten zu überwachen, und so Verschleiß frühzeitig zu erkennen, und falls nötig entsprechende Maßnahmen, wie Reparatur und/oder Austausch der entsprechender Bauteile und/oder Baugruppen zu veranlassen.

Zusätzlich oder alternativ kann der Messparameter auch einer Schwingung der Fachanlage, beispielsweise einer Eigenfrequenz/-Schwingung oder einem Spektrum von Eigenfrequenzen/-Schwingungen der Fachanlage entsprechen. Diese Schwingung der Fachanlage kann beispielsweise durch einen externen Aktuator (beispielsweise einen Schwingungsmotor), beispielsweise bei einer Überprüfung der Fachanlage, angeregt werden oder auch durch ein Schließen von einem oder mehreren Fächern angeregt werden. Es hat sich herausgestellt, dass beispielsweise auch eine Messung solcher Eigenfrequenzen der Fachanlage Aufschluss über einen Abnutzungsgrad von Komponenten der Fachanlage geben kann.

Das Erhalten der Information, die den zumindest einen Wert des zumindest einen Messparameters repräsentiert, umfasst in einer beispielhaften Ausführungsform das Erfassen des zumindest einen Wertes des Messparameters durch zumindest einen Sensor, der an (innerhalb und/oder außerhalb) der Fachanlage angeordnet ist. In einer beispielhaften Ausführungsform ist der zumindest eine Sensor eingerichtet, zumindest eine Schwingung, beispielsweise zumindest eine Eigenfrequenz oder Eigenschwingung, der Fachanlage zu detektieren und/oder zumindest einen Parameter, der einen Klang repräsentiert, der durch eine Bewegung der zumindest einen Komponente ausgelöst wird. Dabei kann der zumindest eine Parameter, der den Klang repräsentiert, in einer beispielhaften Ausführungsform zumindest eine Amplitude des Klangs als Funktion einer Frequenz und/oder ein Audio-Frequenzspektrum des Klangs sein.

Es kann (können) zum Beispiel ein Sensor (mehrere Sensoren) an einer geeigneten Position (ein Beispiel einer vorbestimmten Position) oder mehreren geeigneten Positionen innerhalb, an, oder außerhalb der Fachanlage angeordnet sein. Hierbei kann eine geeignete Position eine Position an einem oder mehreren Orten innerhalb oder außerhalb der Fachanlage unabhängig von einem, mehreren oder allen Fächern der Fachanlage sein, und/oder eine Position an und/oder innerhalb eines, mehrerer oder aller Fächer der Fachanlage sein.

Dabei wird in dieser beispielhaften Ausführungsform nach dem Erfassen durch den zumindest einen Sensor der zumindest eine erfasste Wert des zumindest einen Messparameters beispielsweise an die Steuervorrichtung der Fachanlage und/oder an den Backend-Server übertragen, an welcher und/oder welchem der zumindest eine Wert des zumindest einen Messparameters von der Steuervorrichtung und/oder dem Backend-Server erhalten (z.B. empfangen) wird. Zum Beispiel kann die Steuervorrichtung oder der Backend-Server das Erfassen des zumindest einen Wertes des zumindest einen Messparameters bewirken, indem sie oder er den zumindest einen Sensor ansteuert, so dass dieser den zumindest einen Wert des zumindest einen Messparameters erfasst und an die Steuervorrichtung oder den Backend-Server überträgt.

Der zumindest eine Sensor, der zumindest eingerichtet ist, eine Schwingung der Fachanlage zu detektieren, kann beispielweise von der Steuervorrichtung der Fachanlage und/oder dem Backend-Server gesteuert (z.B. kontrolliert oder angetrieben) werden. Zum Beispiel ist der zumindest eine Sensor drahtlos oder drahtgebunden mit der Steuervorrichtung der Fachanlage und/oder dem Backend-Server verbunden, so dass die Steuervorrichtung und/oder der Backend-Server beispielsweise den zumindest einen Sensor, der zumindest eingerichtet ist, eine Schwingung der Fachanlage zu detektieren, (z.B. mittels eines elektrischen Signals) veranlassen kann, einen Wert eines Messparameters zu erfassen. Des Weiteren kann der zumindest eine Sensor, der zumindest eingerichtet ist, eine Schwingung der Fachanlage zu detektieren, beispielsweise einen erfassten Wert eines Messparameters (z.B. mittels eines elektrischen Signals) an die Steuervorrichtung der Fachanlage und/oder an den Backend-Server übertragen, wobei die Steuervorrichtung und/oder der Backend-Server den erhaltenen Wert des Messparameters zum Beispiel verarbeitet und die genannte Information basierend auf dem erhaltenen Wert des Messparameters bestimmt.

Mit anderen Worten kann die Information (Messinformation), die den zumindest einen Wert des zumindest einen Messparameters repräsentiert, in einer beispielhaften Ausführungsform von der Steuervorrichtung der Fachanlage erhalten werden. Alternativ oder zusätzlich kann diese Information von dem Backend-Server erhalten werden, beispielsweise über eine (direkte oder indirekte) Kommunikation mit der Steuervorrichtung der Fachanlage. In einer beispielhaften Ausführungsform kann die Messinformation alternativ oder zusätzlich von dem Mobilgerät erhalten werden, beispielsweise über direkte drahtlose und/oder drahtgebundene Kommunikation mit der Steuervorrichtung und/oder über direkte drahtlose und/oder drahtgebundene Kommunikation mit dem Backend-Server.

Dazu umfasst die zumindest eine Vorrichtung (z.B. die Steuervorrichtung der Fachanlage, der Backend-Server und/oder das Mobilgerät) zum Beispiel eine oder mehrere Kommunikationsschnittstellen, welche beispielsweise zur Übertragung einer von der zumindest einen Vorrichtung erhaltenen Messinformation (z.B. von der Steuervorrichtung an das Mobilgerät und/oder an den Backend-Server) eingerichtet ist. Hierzu können die eine oder mehreren Kommunikationsschnittstellen beispielsweise auf optischer Übertragung und/oder Übertragung von elektrischen, magnetischen oder elektromagnetischen Signalen oder Feldern (z.B. Bluetooth, NFC und/oder RFID) beruhen. In alternativen oder zusätzlichen Beispielen kann eine Kommunikation über eine Kommunikationsschnittstelle der zumindest einen Vorrichtung auf dem Internet Protocol (IP) basieren. Beispielsweise ist dazu zumindest eine der Kommunikationsschnittstelle(n) der zumindest einen Vorrichtung als Local Area Network (LAN) Schnittstelle ausgeführt.

Gemäß dem genannten Aspekt der vorliegenden Erfindung umfasst das Verfahren ein Bereitstellen von Abnutzungsinformation, die eine Bewertung des Abnutzungsgrades der zumindest einen Komponente der Fachanlage repräsentiert. Die Abnutzungsinformation kann beispielsweise Information sein, die angibt (es ermöglicht, dass die Information daraus erhalten werden kann), ob die zumindest eine Komponente noch gut funktioniert oder gewartet werden muss (z.B. "nicht abgenutzt", "teilweise abgenutzt", "muss gewartet werden"). Dazu kann die Information in geeigneter Weise, beispielsweise in einem computerlesbaren Format, von der zumindest einen Vorrichtung bereitgestellt (z.B. zumindest temporär gespeichert) werden. Die Abnutzungsinformation kann beispielsweise einer Zahl entsprechen, die den Abnutzungsgrad auf einer Zahlenskala angibt, oder kann den Abnutzungsgrad in Form geeigneter Beschreibung durch Wörter wiedergeben. Andere Darstellungen des Abnutzungsgrades sind hierbei denkbar, beispielsweise eine Verwendung einer anderen Skala wie einer Farbskala, o.ä.

Mit anderen Worten stellt die Abnutzungsinformation eine Bewertung des aktuellen Abnutzungsgrades (oder Abnutzungszustandes) dar. Diese Information kann es somit beispielsweise ermöglichen, eine Entscheidung zu treffen, dass die betreffende Komponente gewartet oder ausgetauscht wird, wobei die Verwendung des zumindest einen Wertes, der den zumindest einen Messparameter repräsentiert, in Verbindung mit dem Referenzwert eine vorteilhafte Objektivierung dieser Entscheidung ermöglicht. Wie hierin an anderer Stelle beschrieben, kann beispielsweise der Wert, der dem aktuellen Abnutzungsgrad entspricht, mit dem Referenzwert verglichen werden, der einem Sollzustand entspricht. Beispielsweise kann darauf basierend die Abnutzungsinformation anzeigen, dass ein Unterschied zwischen einem aktuellen Abnutzungszustand (durch den aktuellen Abnutzungsgrad gekennzeichneter Zustand) und einem ursprünglichen Sollzustand so groß ist, dass ein Austausch oder eine Wartung notwendig ist.

Hierbei soll unter dem Bereitstellen (z.B. durch die zumindest eine Vorrichtung) der Abnutzungsinformation zumindest teilweise basierend auf dem zumindest einen Wert des zumindest einen Messparameters und zumindest teilweise basierend auf zumindest einem entsprechenden Referenzwert, der für den Messparameter einem Sollzustand der zumindest einen Komponente der Fachanlage entspricht, beispielsweise so verstanden werden, dass die Abnutzungsinformation zumindest teilweise basierend auf dem zumindest einen Wert und zumindest teilweise basierend auf dem zumindest einen Referenzwert bestimmt wird, und anschließend zum Beispiel für eine Ausgabe, eine Anzeige und/oder eine Übertragung bereitgestellt (beispielsweise zumindest temporär gespeichert) wird und beispielsweise ausgegeben, angezeigt und/oder übertragen wird.

So umfasst das Verfahren gemäß dem genannten Aspekt in einer beispielhaften Ausführungsform ein Ausgeben der Abnutzungsinformation. Hierbei kann ein Ausgeben der Information ein Ausgeben der Information zur Übertragung der Information und/oder zum Anzeigen der Information sein. Eine Anzeige der Information kann beispielsweise eine Anzeige einer Darstellung der Abnutzungsinformation auf dem Display sein, das mit der Fachanlage verbunden ist, und eine Übertragung der Information kann beispielsweise ein Übertragen der Information an ein Mobilgerät und/oder den Backend-Server sein. In einer beispielhaften Ausführungsform umfasst das Verfahren ein Ausgeben der Abnutzungsinformation zur Anzeige auf einem Display, das mit der Steuervorrichtung der Fachanlage verbunden ist und/oder auf einem Display eines Mobilgerätes. Ein Mobilgerät umfasst in einer beispielhaften

Ausführungsform ein Smartphone, einen Handscanner, einen Laptop und/oder einen Tabletcomputer. In einer beispielhaften Ausführungsform kann ein Ausgeben der Abnutzungsinformation zur Anzeige auf einem Display des Mobilgerätes eine Ausgabe an das Mobilgerät über den Backend-Server umfassen.

Beispielsweise kann die Abnutzungsinformation so bereitgestellt werden (beispielsweise auf einem mit der Fachanlage assoziierten Speicher gespeichert werden), dass Sie von Bedienungspersonal der Fachanlage bei Bedarf ausgelesen werden kann. Zu diesem Zweck kann die Abnutzungsinformation dem Bedienpersonal dann (in Antwort auf eine Ausleseanfrage an die Steuervorrichtung) auf dem Display angezeigt werden, das mit der Steuervorrichtung der Fachanlage verbunden ist, und/oder auf einem Display des Mobilgerätes. Alternativ oder zusätzlich ist es möglich, dass das Ausgeben der Abnutzungsinformation ohne vorherige Ausleseanfrage an die Steuervorrichtung, beispielsweise als "Push-Mitteilung" erfolgt. So kann beispielsweise das Verfahren gemäß dem genannten Aspekt in einer beispielhaften Ausführungsform ein automatisches Ausgeben der Abnutzungsinformation umfassen, wenn eine Differenz zwischen dem zumindest einen Wert des zumindest einen Messparameters und dem zumindest einen Referenzwert ein vorbestimmtes Kriterium erfüllt, beispielsweise größer als ein vorgegebener Schwellwert ist. Auf diese Weise kann beispielsweise Bedienpersonal der Fachanlage automatisch informiert werden, wenn eine Komponente einer Fachanlage zu warten und/oder auszutauschen ist. Auf diese Weise kann es ermöglicht werden, dass eine Anzahl von Überprüfungen der Komponenten einer Fachanlage reduziert werden kann.

Wie erwähnt, umfasst in einer beispielhaften Ausführungsform der zumindest eine Messparameter zumindest einen Parameter, der eine Schwingungseigenschaft der Fachanlage und/oder einen durch eine Bewegung der zumindest einen Komponente ausgelösten Klang repräsentiert.

Der zumindest eine Messparameter kann beispielsweise einer oder mehrerer Schwingungsfrequenzen (beispielsweise Schwingungs-Eigenfrequenzen) der Fachanlage entsprechen, die beispielsweise durch eine Anregung, beispielsweise beim Schließen einer Tür oder Klappe eines Fachs der Fachanlage ausgelöst wird, und die durch einen geeigneten Sensor gemessen werden, der an geeigneter Position an der Fachanlage angebracht ist. Eine Anregung solcher Schwingungen kann alternativ oder zusätzlich auch durch andere bewegliche Komponenten der Fachanlage, beispielsweise durch einen Drucker und/oder zumindest einen Lüfter angeregt werden. Alternativ oder zusätzlich kann es sich bei der einen oder den mehreren Schwingungsfrequenzen um Klangfrequenzen eines Klanges handeln, der durch eine Bewegung der zumindest einen Komponente (beispielsweise bei einem Öffnen und/oder Schließen der Tür oder Klappe, und/oder durch eine Verwendung eines Druckers und/oder eines Lüfters) ausgelöst wird, und der durch einen geeigneten Sensor, beispielsweise durch ein Mikrofon oder mehrere Mikrofone gemessen, bzw. aufgenommen, wird.

Der zumindest eine Messparameter kann beispielsweise einer Amplitude der einen oder der mehreren Schwingungsfrequenzen umfassen. Insbesondere kann der zumindest eine Wert des zumindest einen Messparameters in einer beispielhaften Ausführungsform einem Schwingungsspektrum (beispielsweise einem Audio-Frequenzspektrum) entsprechen. Hierbei kann ein Schwingungsspektrum in einer beispielhaften Ausführungsform eine oder mehrere Eigenfrequenzen der Fachanlage umfassen, und/oder ein Amplitudenspektrum, das eine Mehrzahl von Schwingungsamplituden als Funktion der Schwingungsfrequenz umfasst, beispielsweise ein Klangspektrum des durch die Bewegung der zumindest einen Komponente ausgelösten Klangs.

Ein solches Schwingungsspektrum kann somit als Schwingungs-Fingerabdruck verstanden werden, der sich abhängig von einer Abnutzung oder einem Verschleiß von beweglichen Komponenten der Fachanlage ändern kann. Wie erwähnt hat es sich dabei herausgestellt, dass sich beispielsweise ein Klang beim Schließen einer Tür oder Klappe eines Fachs abhängig von einem Verschleißzustand der Tür/Klappe und/oder entsprechender Scharnier- und/oder Schlossbauteile ändern kann. Eine solche Änderung kann über eine Messung der Klang- und/oder Schwingungsfrequenzen als Funktion des Abnutzungsgrades verfolgt, und beispielsweise mit entsprechenden Referenzwerten verglichen, werden, um zu bestimmen, ob eine Wartung einer bestimmten Komponente der Fachanlage nötig ist, beispielsweise wenn eine Differenz zwischen dem erhaltenen (z.B. gemessenen) zumindest einen Wert und dem Referenzwert ein vorbestimmtes Kriterium erfüllt, beispielsweise größer als ein vorbestimmter Schwellwert ist.

Um nicht nur ermitteln zu können, dass generell eine Wartung der Fachanlage erforderlich ist, sondern um auch spezieller bestimmen zu können, dass eine Wartung einer bestimmten Komponente der Fachanlage nötig ist, umfasst das Verfahren in einer beispielhaften Ausführungsform weiter ein Erhalten von Identifikationsinformation, die mit der zumindest einen Komponente der Fachanlage assoziiert ist, wobei der Schritt des Bereitstellens weiter zumindest teilweise auf der Identifikationsinformation basiert.

Beispielsweise kann bei einem Abholvorgang einer Sendung durch einen Benutzer ein Fach der Fachanlage durch die Steuervorrichtung der Fachanlage geöffnet werden, in welchem die von dem Benutzer abzuholende Sendung aufbewahrt wird. Dazu kann in einem entsprechenden Speicher, auf den die Steuervorrichtung der Fachanlage zugreifen kann, eine Identifikation der Sendung verknüpft oder in Zusammenhang mit Identifikationsinformation des Fachs, in dem die Sendung aufbewahrt wird, gespeichert sein. Wenn der Benutzer beim Abholen die Sendung identifiziert, kann die Steuervorrichtung auf diesen Speicher zugreifen, um die Identifikationsinformation des Fachs zu ermitteln, und um dieses für den Benutzer zu öffnen. Beispielsweise auf diese Weise (beispielsweise durch Zugriff auf den Speicher) kann die Steuervorrichtung entsprechende Identifikationsinformation erhalten, so dass eine Messung des Klangs des Schließens des Fachs durch den Benutzer, nachdem die Sendung entnommen wurde, mit dieser Identifikationsinformation assoziiert werden kann. Analog kann die Identifikationsinformation beim Einlegen einer Sendung in ein Fach erhalten werden.

In einer beispielhaften Ausführungsform umfasst die Identifikationsinformation, die mit der zumindest einen Komponente der Fachanlage assoziiert ist, eine

Identifikationsinformation eines Fachs, beispielsweise eines Fachs in dem eine abzuholende Sendung aufbewahrt wird, oder eines Fachs in das eine aufzubewahrende Sendung einzulegen ist. Dabei kann die Identifikationsinformation des Fachs mit einem Schloss (Schließmechanismus) des Fachs assoziiert sein, das durch die Steuervorrichtung der Fachanlage ansteuerbar ist, beispielsweise zum Öffnen des Fachs. Die Steuervorrichtung kann somit eingerichtet sein zum Bewirken eines Öffnens zumindest eines Fachs der Fachanlage, beispielsweise durch Ansteuern des Schließmechanismus. Somit kann ein Erhalten der Identifikationsinformation, die mit der zumindest einen Komponente der Fachanlage assoziiert ist, in einer beispielhaften Ausführungsform ein Erhalten der Identifikationsinformation, die mit der zumindest einen Komponente der Fachanlage assoziiert ist in Antwort auf ein Identifizieren und/oder Ansteuern eines Schließmechanismus eines Fachs der Fachanlage umfassen.

In einer beispielhaften Ausführungsform umfasst die Identifikationsinformation, die mit der zumindest einen Komponente der Fachanlage assoziiert ist, eine Identifikationsinformation, die mit einem Fach der Fachanlage assoziiert ist, insbesondere mit einem Schließmechanismus des Fachs, wobei das Verfahren weiter umfasst:
- Bewirken des Öffnens des zumindest einen Fachs das mit der Identifikationsinformation assoziiert ist, insbesondere durch Ansteuern eines Schließmechanismus in Antwort auf das Erhalten der Identifikationsinformation.

Alternativ oder zusätzlich kann eine Identifizierung eines Fachs der Fachanlage im Zusammenhang mit einem Signal erhalten werden, dass durch zumindest einen Sensor erhalten wird, der mit dem Fach assoziiert ist. Beispielsweise kann der zumindest eine Sensor, der mit dem Fach assoziiert ist, einen Gewichtssensor umfassen, der in einer beispielhaften Ausführungsform Teil einer im Fach angeordneten elektronische Waage sein kann. So kann die Identifikationsinformation, die mit der zumindest einen Komponente der Fachanlage assoziiert ist, in einer beispielhaften Ausführungsform im Zusammenhang mit einer Messung eines Sensors erhalten werden, der mit dem Fach der Fachanlage assoziiert ist. Beispielsweise kann die Identifikationsinformation im Zusammenhang mit einer Erfassung einer Gewichtsänderung bei einem Einlegen einer Sendung in das Fach oder bei einem Herausnehmen der Sendung aus dem Fach, die durch den Sensor, in einer beispielhaften Ausführungsform einen Gewichtssensor, erfasst wird, erhalten werden.

Der zumindest eine Sensor, der mit dem Fach assoziiert ist, kann zusätzlich oder alternativ andere Sensoren umfassen, beispielsweise eine oder mehrere Kameras, die jeweils ein oder mehrere Bilder (z.B. als Teil eines Videos) eines Inneren des Fachs aufnehmen, und so ein Erfassen eines Herausnehmens oder Hineinlegens einer Sendung ermöglichen können.

So kann die Identifikationsinformation in einer beispielhaften Ausführungsform mit einem entsprechenden Fach, insbesondere mit einem Schließmechanismus des Fachs, einer Mehrzahl von Fächern der Fachanlage assoziiert sein. Weiter kann in einer beispielhaften Ausführungsform das Erhalten der Identifikationsinformation ein Zugreifen auf einen Speicher und Ermitteln der Identifikationsinformation als Identifikationsinformation eines Fachs der Fachanlage, in dem eine abzuholende Sendung aufbewahrt ist, oder in das eine Sendung zur Aufbewahrung eingelegt werden soll, umfassen. Die Identifikationsinformation kann im Verfahren gemäß dem genannten Aspekt von der Steuervorrichtung der Fachanlage direkt und/oder beispielsweise nach entsprechender Übertragung von dem Backend-Server und/oder dem Mobilgerät verwendet werden.

Wie beschrieben kann das hier offenbarte Verfahren gemäß dem genannten Aspekt in vorteilhafter Weise angewendet werden, um festzustellen, ob eine Wartung der zumindest einen Komponente, beispielsweise einer Tür oder Klappe eines Fachs und damit verbundener beweglicher Komponenten wie Scharnierkomponenten und/oder Schlosskomponenten erforderlich ist. Allgemein ist das Verfahren für Komponenten von Fachanlagen insbesondere anwendbar, die bewegliche Teile umfassen. Mit anderen Worten umfasst die zumindest eine Komponente in einer beispielhaften Ausführungsform zumindest ein Bauteil und/oder eine Baugruppe der Fachanlage, welches und/oder welche zumindest einen beweglichen Bestandteil aufweisen.

Beispielsweise umfasst die zumindest eine Komponente in einer beispielhaften Ausführungsform eine oder mehrere der folgenden Komponenten der Fachanlage:
- eine Tür eines Fachs einer Mehrzahl von Fächern der Fachanlage;
- einen Schließmechanismus eines Fachs einer Mehrzahl von Fächern der Fachanlage;
- zumindest ein Scharnier eines Fachs einer Mehrzahl von Fächern der Fachanlage;
- einen Drucker, der von der Fachanlage umfasst ist;
- einen Lüfter, der von der Fachanlage umfasst ist;
- zumindest ein Bedienelement, insbesondere zumindest eine Taste und/oder ein Schalter, zum Bedienen einer Steuervorrichtung der Fachanlage.

Das Verfahren gemäß dem genannten Aspekt der vorliegenden Erfindung umfasst das Bereitstellen der Abnutzungsinformation, zumindest teilweise basierend auf dem zumindest einen Wert des zumindest einen Messparameters, und zumindest teilweise basierend auf dem zumindest einen entsprechenden Referenzwert.

In einer beispielhaften Ausführungsform kann das Bereitstellen der Abnutzungsinformation umfassen:
- Vergleichen des zumindest einen Wertes des zumindest einen Messparameters mit dem zumindest einen entsprechenden Referenzwert, und
- Bereitstellen der Abnutzungsinformation basierend auf einem Ergebnis des Vergleichs.

Dabei kann das Bereitstellen der Abnutzungsinformation basierend auf dem Ergebnis des Vergleichs ein Bestimmen der Abnutzungsinformation basierend auf einem Ergebnis des Vergleichs umfassen. In einer beispielhaften Ausführungsform kann ein Vergleich eine Bildung einer Differenz zwischen dem zumindest einen Wert und dem zumindest einen Referenzwert umfassen, wobei die Abnutzungsinformation basierend darauf ermittelt werden kann, ob die Differenz vorgegebene Kriterien erfüllt. Beispielsweise kann die Abnutzungsinformation anzeigen, dass eine Wartung einer Komponente erforderlich ist, wenn die Differenz ein vorgegebenes Kriterium in der Weise erfüllt, dass die Differenz größer als ein vorgegebener Wert ist. Vorgegebene Kriterien können zusätzlich auch für andere Abnutzungsgrade (z.B. entsprechend "nicht abgenutzt", "leicht abgenutzt", etc.) vorgesehen sein. Im Falle der beschriebenen SchwingungsSpektren kann ein Vergleich über geeignete mathematische Verfahren zum Vergleich mathematischer Funktionen (wie beispielsweise Korrelationsfunktionen) erfolgen.

Alternativ oder zusätzlich kann das Bereitstellen der Abnutzungsinformation umfassen:
- Verwenden zumindest des zumindest einen Referenzwertes um ein auf künstlicher Intelligenz basierendes Rechenmodul zu trainieren; und
- Verwenden des auf künstlicher Intelligenz basierenden Rechenmoduls, um basierend auf dem zumindest einen Wert des zumindest einen Messparameters die Abnutzungsinformation zu bestimmen.

Hierbei kann das auf künstlicher Intelligenz basierende Rechenmodul insbesondere ein künstliches neuronales Netz umfassen.

So können beispielsweise mehrere Messungen von Klängen, beispielsweise beim Öffnen oder Schließen von Fächern einer Fachanlage in einem Sollzustand (beispielsweise nach Aufstellen der Fachanlage mit leeren Fächern) verwendet werden, das besagte Rechenmodul so zu trainieren, dass es den Sollzustand als solchen verlässlich erkennt und bei Abweichungen von diesen Sollzuständen entsprechende Abnutzungsinformation ausgibt.

In einer beispielhaften Ausführungsform können weiter auch Messungen von Klängen, beispielsweise beim Öffnen oder Schließen von Fächern mit abgenutzten Komponenten verwendet werden, um das Rechenmodul auf entsprechende Abnutzungsgrade zu trainieren. So umfasst das Verfahren in einer beispielhaften Ausführungsform ein Verwenden von Werten des zumindest einen Messparameters für vorbestimmte Abnutzungsgrade zumindest einer Komponente der Fachanlage, um das auf künstlicher Intelligenz basierende Rechenmodul zu trainieren.

In einer beispielhaften Ausführungsform umfasst das Verfahren gemäß dem genannten Aspekt weiter ein Erhalten des zumindest einen Referenzwertes.

Ein Erhalten des zumindest einen Referenzwertes kann vorteilhafter Weise erfolgen, wenn sichergestellt ist, dass bewegliche Komponenten, insbesondere Türen/Klappen von Fächern und damit verbundene bewegliche Komponenten wie beispielsweise Komponenten von Schließmechanismen und/oder von Scharnieren in jeweiligen Sollzuständen sind. Dabei kann Sollzustand beispielsweise so verstanden werden, dass die jeweiligen Komponenten funktionsfähig (korrekt eingestellt/justiert) sind, und somit keine Wartung notwendig ist, und dass beispielsweise die zu überprüfenden Fächer der Fachanlage (beispielsweise Fächer einer bestimmten Untergruppe aller Fächer oder alle Fächer) leer sind. Dadurch, dass sichergestellt wird, dass die zu überprüfenden Fächer leer sind, wird insbesondere sichergestellt, dass eine Bewegung entsprechender beweglicher Komponenten nicht durch eingelegte Sendung beeinträchtigt wird, beispielsweise, wenn eine zu große Sendung eine Tür oder Klappe eines Fachs nach außen drückt.

So kann der zumindest eine Referenzwert beispielsweise über eine Messung eines Schwingungsverhaltens bei einem Schließen (oder Öffnen) der Türen oder Klappen der zu untersuchenden Fächer (beispielsweise aller Fächer der Fachanlage) bestimmt werden. Hierbei kann eine Referenzmessung beispielsweise nach einem erstmaligen Aufstellen der Fachanlage erfolgen und eine Referenzmessung kann durch ein sequentielles Schließen (auch beispielsweise durch ein kontrolliertes Zuschlagen) aller Fachtüren erfolgen.

Im Laufe der Nutzung der Fachanlage können in der Folge beispielsweise kontinuierlich Messungen (beispielsweise während einer Verwendung von Fächern durch Benutzer beim Abholen oder Einlegen von Sendungen) der Klangeigenschaften beim Öffnen oder Schließen der Fächer durchgeführt werden, deren Ergebnisse mit den Referenzwerten verglichen werden können. Dies ermöglicht, dass bewegliche Komponenten, insbesondere Türen, Scharniere und/oder Schlosskomponenten von Fächern der Fachanlage kontinuierlich überwacht werden können, und dass abgenutzte und/oder defekte Komponenten frühzeitig gewartet und/oder ausgetauscht werden können.

Alternativ oder zusätzlich kann der zumindest eine Referenzwert beispielsweise über eine Messung einer Eigenfrequenz oder mehrerer Eigenfrequenzen der Fachanlage erfolgen. Dazu kann die Fachanlage beispielsweise über einen geeigneten externen Aktuator, beispielsweise einen Schwingungsmotor) angeregt werden, und entsprechende Eigenfrequenzen können an geeigneter Stelle der Fachanlage gemessen werden. Es hat sich herausgestellt, dass eine Veränderung der Eigenfrequenz der Fachanlage auf einen mechanischen Defekt der Fachanlage zurückzuführen sein kann. Auch in diesem Fall kann eine Referenzmessung beispielsweise nach einem erstmaligen Aufstellen der Fachanlage erfolgen, nachdem sichergestellt wurde, dass einerseits beispielsweise alle Fächer der Fachanlage leer sind, und bewegliche Komponenten der Fachanlage korrekt justiert sind. Eine Referenzmessung kann dann durch Anregung einer Eigenschwingung der Fachanlage und entsprechender Messung der Eigenfrequenz erfolgen.

Im Laufe der Nutzung der Fachanlage können in der Folge beispielsweise kontinuierlich Messungen der Eigenfrequenz der Fachanlage erfolgen, wobei es möglich sein kann, dies während der normalen Nutzung der Fachanlage durchzuführen, oder beispielsweise in regelmäßigen Wartungsintervallen sicherzustellen, dass die Fächer der Fachanlage leer sind, und die Messung der Eigenschwingung in diesem Zustand zu wiederholen.

Somit umfasst das Erhalten des zumindest einen Referenzwertes in einer beispielhaften Ausführungsform
- Anregen einer Schwingung der Fachanlage und/oder Erzeugen eines Klangs durch zumindest eine Komponente der Fachanlage.

Hierbei kann das Anregen einer Schwingung der Fachanlage ein Anregen einer Eigenfrequenz durch den externen Aktuator umfassen. Das Erzeugen des Klangs durch die zumindest eine Komponente der Fachanlage kann ein, beispielsweise sequentielles, Öffnen und/oder Schließen von einem oder mehreren Fächern der Fachanlage umfassen, aber auch ein Verwenden eines Druckers und/oder eines Ventilators der Fachanlage.

In einer beispielhaften Ausführungsform umfasst das Erhalten des zumindest einen Referenzwertes weiter
- In Antwort auf das Anregen der Schwingung der Fachanlage und/oder das Erzeugen des Klangs durch die zumindest eine Komponente der Fachanlage, Erhalten einer Information, die zumindest einen Wert des zumindest einen Messparameters repräsentiert.

So kann beispielsweise die Eigenfrequenz der Fachanlage durch einen oder mehrere geeignete Schwingungssensoren an geeigneten Positionen der Fachanlage erfolgen. Der zumindest eine Wert des zumindest einen Messparameters kann alternativ oder zusätzlich durch ein Erfassen von Charakteristika des Klangs, beispielsweise von einem Audio-Frequenzspektrum erfolgen. In diesem Fall kann der zumindest eine Wert des zumindest einen Messparameters über einen geeigneten Sensor für Audiosignale, beispielsweise über ein oder mehrere Mikrofone gemessen, bzw. aufgenommen werden. Dazu können ein oder mehrere Mikrofone beispielsweise an einer bestimmten Stelle der Fachanlage unabhängig von Fächern der Fachanlage, beispielsweise zusammen mit der Steuervorrichtung der Fachanlage angeordnet sein.

Insbesondere umfasst somit in einer beispielhaften Ausführungsform das Erhalten der Information, die den zumindest einen Wert des zumindest einen Messparameters repräsentiert:
- Erfassen des zumindest einen Wertes des Messparameters durch zumindest ein Mikrofon, das an einer bestimmten Position der Fachanlage angeordnet ist.

Dabei ist die bestimmte Position in einer beispielhaften Ausführungsform eine bestimmte Position der Fachanlage, die unabhängig von Fächern der Fachanlage (beispielsweise verschieden von Positionen der Fächer der Fachanlage und/oder außerhalb von Fächern der Fachanlage) ist. Es ist aber auch möglich, dass in anderen beispielhaften Ausführungsformen die Fächer der Fachanlage mit entsprechenden Mikrofonen versehen sind.

In einer beispielhaften Ausführungsform umfasst das Erhalten des zumindest einen Referenzwertes weiter
- Bestimmen des zumindest einen Referenzwertes basierend auf der erhaltenen Information.

In einer beispielhaften Ausführungsform erfolgt die Anregung der Schwingung der Fachanlage und/oder das Erzeugen des Klangs durch die zumindest eine Komponente der Fachanlage durch:
- einen externen Aktuator und/oder
- ein (beispielsweise sequentielles) Öffnen und/oder Schließen von zumindest einem Fach der Fachanlage.

Insbesondere erfolgt die Anregung der Schwingung der Fachanlage und/oder das Erzeugen des Klangs durch die zumindest eine Komponente der Fachanlage in einer beispielhaften Ausführungsform durch:
- Sequentielles Öffnen und/oder Schließen von Fächern zumindest einer Untermenge aller Fächer der Fachanlage.

Im Falle eines sequentiellen Öffnens und/oder Schließens der Türen/Klappen der Fächer der Fachanlage können in beispielhaften Ausführungsformen jeweilige Referenzwerte (beispielsweise jeweilige Referenz-Audiofrequenzspektren) für jedes Fach einzeln bestimmt werden. In beispielhaften Ausführungsformen kann alternativ oder zusätzlich auch basierend auf den bei jeweiligem Öffnen/Schließen erzeugten Klängen ein Referenzwert durch geeignete Mittelwertbildung oder ein, beispielsweise gemitteltes, Referenzspektrum ermittelt werden.

In einer beispielhaften Ausführungsform umfasst das Erhalten des zumindest einen Referenzwertes weiter:
- Erhalten der Information, die den zumindest einen Wert des zumindest einen Messparameters repräsentiert, für jeden Vorgang des Öffnens und/oder Schließens eines Fachs aus zumindest einer Untermenge aller Fächer der Fachanlage.

Die Information kann somit für einen Teil, eine Untermenge, aller Fächer der Fachanlage oder für alle Fächer der Fachanlage erhalten werden. Dabei umfasst, für den Vorgang des Öffnens und/oder Schließens des Fachs, in einer beispielhaften Ausführungsform die zumindest eine Komponente der Fachanlage zumindest eine bewegliche Komponente des Fachs aus der Untermenge aller Fächer der Fachanlage. Eine bewegliche Komponente des Fachs umfasst insbesondere eine Tür und/oder Klappe des Fachs, zumindest eine Komponente von einem oder mehreren Scharnieren des Fachs, und/oder zumindest eine Komponente eines Schließmechanismus (Fachschloss) des Fachs.

In einer beispielhaften Ausführungsform umfasst das Erhalten des zumindest einen Referenzwertes weiter
- Bestimmen des zumindest einen Referenzwertes basierend auf der Information, die für jeden Vorgang des Öffnens und/oder Schließens eines Fachs aus zumindest der Untermenge aller Fächer der Fachanlage erhalten wurde.

So kann beispielsweise ein jeweiliger Referenzwert als Referenz für spätere Messungen des Abnutzungsgrades zumindest einer Komponente eines entsprechenden Fachs erhalten werden (ein jeweiliger Referenzwert für jedes Fach), wobei eine Zuordnung von Referenzwerten zu entsprechenden Fächern über die genannte Identifikationsinformation, die mit der zumindest einen Komponente (in diesem Fall zumindest einer beweglichen Komponente des entsprechenden Fachs) der Fachanlage assoziiert ist erfolgen kann. Alternativ oder zusätzlich kann die Information, die die für jeden Vorgang des Öffnens und/oder Schließens eines Fachs aus zumindest der Untermenge aller Fächer der Fachanlage erhalten wurde, verwendet werden, einen repräsentativen Referenzwert, beispielsweise über eine geeignete Mittelung zu erhalten. So kann beispielsweise aus Referenz-Audio-Frequenzspektren, die für jedes Fach erhalten wurden ein geeignet gemitteltes Referenz-Audio-Frequenzspektrum für alle Fächer der Untermenge (oder für alle Fächer der Fachanlage) ermittelt werden.

Wie erwähnt, kann es vorteilhaft sein, dass bei der Bestimmung des zumindest einen Referenzwertes Fächer der Fachanlage nicht genutzt sind. Somit umfasst das Verfahren in einer beispielhaften Ausführungsform weiter zumindest eines von:
- Feststellen, dass das zumindest eine Fach der Fächer der Fachanlage ungenutzt ist;
- Feststellen, dass zumindest alle Fächer der Untermenge aller Fächer der Fachanlage ungenutzt sind;
- Feststellen, dass alle Fächer der Fachanlage ungenutzt sind.

Das Feststellen kann beispielsweise durch den genannten Gewichtssensor und/oder durch die genannte Kamera oder die genannten Kameras erfolgen. In einer beispielhaften Ausführungsform umfasst das Verfahren somit weiter:
- Erhalten einer Information, die einen Messwert zumindest eines Sensors repräsentiert, der mit zumindest einem Fach der Fachanlage assoziiert ist.

In einer beispielhaften Ausführungsform ist die zumindest eine Vorrichtung zumindest Teil einer Steuervorrichtung der Fachanlage. Alternativ oder zusätzlich ist die zumindest eine Vorrichtung zumindest Teil eines Backend-Servers und/oder eines Mobilgerätes.

Die oben beschriebenen Ausführungsbeispiele und beispielhaften Ausgestaltungen aller Aspekte der vorliegenden Offenbarung sollen auch in allen Kombinationen miteinander offenbart verstanden werden. Insbesondere gilt die Offenbarung eines Verfahrensschrittes auch als Offenbarung von Mitteln zur Durchführung des jeweiligen Verfahrensschritts. Ebenso gilt die Offenbarung von Mitteln zur Durchführung eines Verfahrensschritts auch als Offenbarung des Verfahrensschritts selbst.

Weitere vorteilhafte beispielhafte Ausgestaltungen der vorliegenden Offenbarung sind der folgenden detaillierten Beschreibung einiger beispielhafter Ausführungsformen insbesondere in Verbindung mit den Figuren zu entnehmen. Die beiliegenden Figuren sollen jedoch nur beispielhaft dem Zwecke der Verdeutlichung zu verstehen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1a, 1b: schematische Darstellungen beispielhafter Ausführungsformen eines Fachs einer Fachanlage;
- Fig. 2: eine schematische Darstellung einer beispielhaften Ausführungsform einer Fachanlage;
- Fig. 3: eine schematische Darstellung einer beispielhaften Ausführungsform einer Steuervorrichtung einer Fachanlage gemäß den verschiedenen Aspekten der vorliegenden Offenbarung;
- Fig. 4: ein Flussdiagramm einer bespielhaften Ausführungsform eines Verfahrens gemäß dem genannten Aspekt der vorliegenden Offenbarung;
- Fig. 5: beispielhafte Ausführungsformen von Speichermedien.

### Detaillierte Beschreibung einiger beispielhafter Ausführungsformen

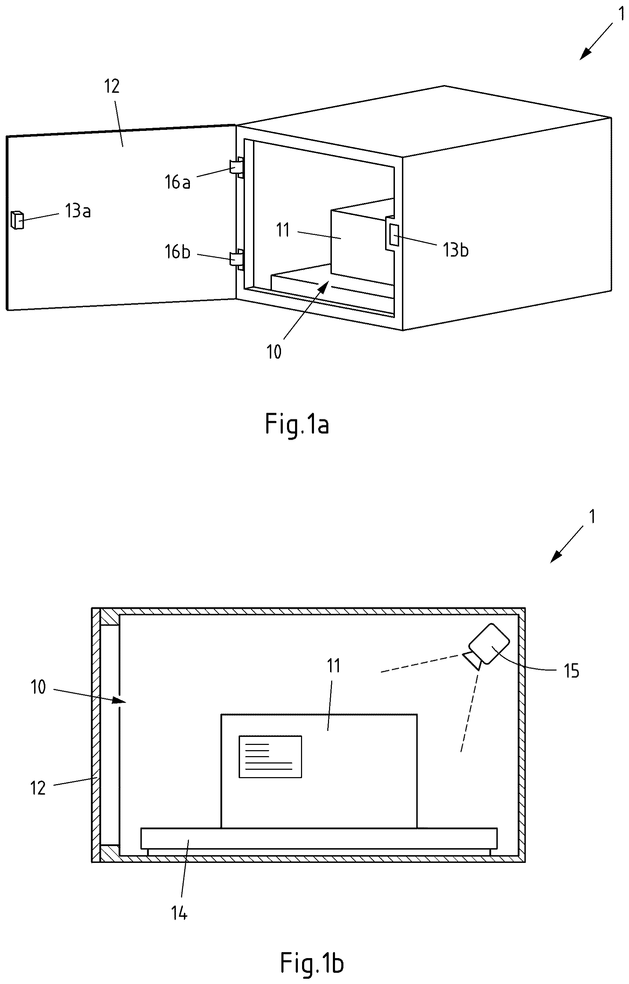

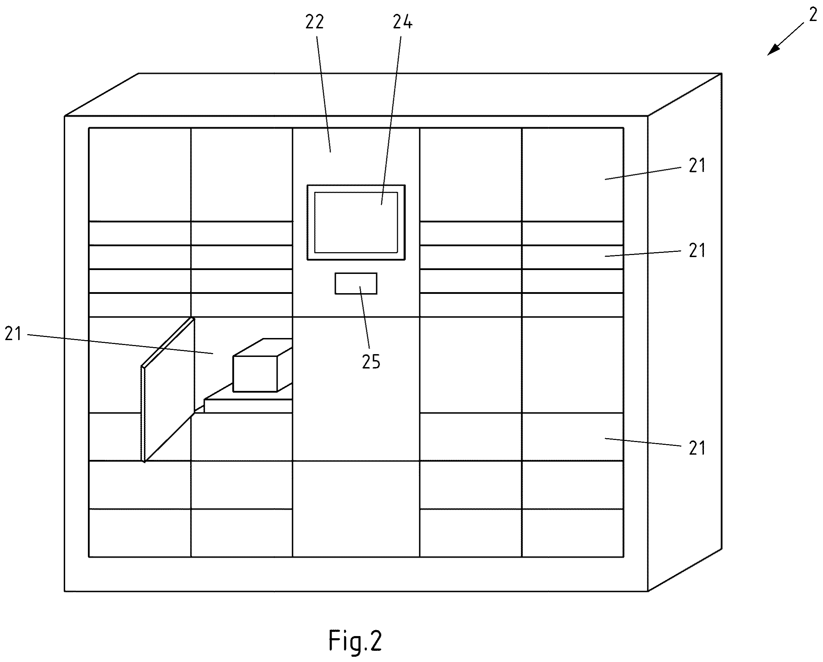

Fig. 1a und Fig. 1b zeigen schematische Darstellungen beispielhafter Ausführungsformen eines Fachs 1 einer Fachanlage (siehe Fig. 2) gemäß verschiedenen Aspekten der vorliegenden Offenbarung.

Fig. 1a zeigt dabei eine perspektivische Außenansicht des Fachs 1 und Fig. 1b zeigt einen Querschnitt durch das Fach 1.

Das Fach 1 umfasst beispielsweise zumindest einen Innenraum 10 eingerichtet zur Aufnahme von zumindest einer Sendung 11 (z.B. einem Brief, Paket oder Päckchen). Ein solcher Innenraum 10 des Fachs mittels einer Tür 12 verschließbar.

Fach 1 kann durch ein Schloss (Schließmechanismus) geschlossen oder verschlossen werden, wobei in Fig. 1a jeweilige Komponenten 13a und 13b des Schlosses im nicht verschlossenen Zustand gezeigt sind. Mit dem Schloss kann der Innenraum 10 mittels der Tür 12 geschlossen werden, um den Zugang von Benutzern zum Innenraum 10 und damit zur Benutzung des Fachs 1 kontrollieren zu können. Das Schloss kann beispielsweise standardmäßig in eine Verriegelungsposition zurückkehren und dann beispielsweise nur zur Entriegelung ansteuerbar sein. Nach erfolgter Entriegelung des Schlosses kann dann beispielsweise die Tür 12 des Fachs 1 geöffnet werden. Da das Schloss automatisch in die Verriegelungsposition zurückkehrt, kann eine Verriegelung des Fachs 1 durch Schließen der Tür 12 erzielt werden, beispielsweise indem beim Schließen der Tür 12 eine Fallenfunktion des Schlosses 13 ausgenutzt wird.

Das Schloss des Fachs 1 ist beispielsweise steuerbar, insbesondere in elektronischer Form. Insbesondere kann zumindest der Prozess des Schließens (z.B. des Verriegelns) und/oder des Öffnens (z.B. des Entriegelns) des Schlosses gesteuert (z.B. bewirkt) werden. Die Steuerung des Schlosses kann beispielsweise durch eine vom Fach 1 umfasste oder mit dem Fach 1 verbundene oder dem Fach 1 zugeordnete Schlosssteuereinheit (nicht gezeigt) erfolgen, wobei die Schlosssteuereinheit der Fachanlage 1 beispielsweise durch eine übergeordnete Steuervorrichtung der Fachanlage (nicht sichtbar in Fig. 1a und Fig. 1b) gesteuert wird.

Wie in Fig. 1b gezeigt, umfasst das Fach 1 zum Beispiel zumindest einen Sensor, welcher dazu eingerichtet ist, zumindest festzustellen, dass eine Sendung 11 in das Fach 1 eingelegt wurde und/oder sich im Fach 1 befindet (wie in Fig. 1b gezeigt). Der zumindest eine Sensor des Fachs (ein Beispiel eines Sensors, der mit dem Fach 1 assoziiert ist) kann in einem Beispiel durch einen Gewichtssensor gegeben sein, wobei der Gewichtssensor beispielhaft Teil einer im Innenraum 10 des Fachs 1 angeordneten elektronische Waage 14 sein kann. Beispielhaft ist eine solche Waage 14 in den Boden des Fachs 1 eingelassen, sodass das Gewicht der Sendung 11 erfasst wird, wenn sich diese Sendung 11 in dem Innenraum 10 des Fachs 1 befindet.

Alternativ oder zusätzlich zu einem Gewichtssensor kann das Fach 1 weitere Sensoren umfassen, die verwendet werden können, um festzustellen, ob eine Sendung in das Fach 1 eingelegt wurde, oder aus dem Fach 1 entfernt wurde. Zum Beispiel kann das Fach 1 einen oder mehrere optische oder optoelektronische Sensoren umfassen. In einem weiteren Beispiel kann das Fach 1 eine oder mehrere Kameras 15 umfassen, die jeweils ein oder mehrere Bilder der eingelegten Sendung 11 erfassen können.

Als Teil einer Fachanlage, die zum Annehmen oder Versenden von Sendungen vorgesehen ist, ist das Fach 1 (z.B. der Innenraum 10) in einer beispielhaften Ausführungsform für einen dauerhaften Außeneinsatz konzipiert. Demnach kann das Fach 1 zum Beispiel durch besondere Schutzmaßnahmen dazu eingerichtet sein, beispielsweise Umwelteinflüssen (z.B. wetterbedingte Feuchtigkeit, Hitze, Kälte) oder Vandalismus (z.B. mutwillige Beschädigung oder Manipulation des Fachs) zu widerstehen. Beispielsweise kann das Schloss 13 des Fachs 1 besonders sicher ausgestaltet sein, oder die Tür 12 des Fachs 1 zum wasserdichten Verschließen des Fachs 1 ausgestaltet sein.

Fig. 2 zeigt eine schematische Darstellung einer beispielhaften Ausführungsform einer Fachanlage 2 gemäß verschiedenen Aspekten der vorliegenden Offenbarung.

Zum Beispiel umfasst eine Fachanlage 2 eine Vielzahl von Fächern 21 (also beispielsweise mehr als ein Fach oder mehr als zwei Fächer). Die Fächer 21 sind beispielsweise zur Aufnahme von Sendungen (z.B. Briefe, Pakete, Päckchen) oder Lieferungen oder Gegenständen (z.B. Wertgegenstände, Gepäck, etc.) eingerichtet. Zumindest einige der Fächer 21 sind jeweils verschließbar, beispielsweise mittels einer jeweiligen Tür oder Klappe. Zumindest einige der Fächer 21 sind beispielsweise mit einem jeweiligen Schloss versehen, um den Zugang von Benutzern zu diesen einzelnen Fächern 21 der Fachanlage 2 kontrollieren zu können.

Das Schloss eines jeweiligen Fachs 21 ist beispielsweise steuerbar, insbesondere in elektronischer Form. Insbesondere kann zumindest der Prozess des Verriegelns und/oder Entriegelns des Schlosses gesteuert werden. Die Steuerung des Schlosses eines Fachs 21 kann beispielsweise durch eine Schlosssteuereinheit erfolgen, wobei beispielsweise alle Schlosssteuereinheiten oder diejenigen eines oder mehrerer Module der Fachanlage 2, beispielsweise durch eine übergeordnete Steuervorrichtung 22 der Fachanlage 2 gesteuert werden.

Wie in Fig. 2 am Beispiel des geöffneten Fachs 21 beispielhaft gezeigt, kann ein Fach 21 (z.B. das in Fig. 1a und Fig. 1b gezeigte Fach 1) ein Teil der Fachanlage 2 sein. Beispielhaft ist das Fach 21 in der Fachanlage 2 installiert, sodass das Fach 21 für einen Benutzer der Fachanlage 2 komfortabel zugänglich ist. Beispielsweise kann das Fach 21 als Teil der Fachanlage 2 mit der Steuervorrichtung 22 der Fachanlage 2 verbunden sein, um Information wie beispielsweise eine Signal eines Sensors, der mit dem Fach assoziiert ist, an die Steuervorrichtung 21 der Fachanlage 2 zu übertragen. Alternativ oder zusätzlich kann das Fach 21 als Teil der Fachanlage 2 beispielsweise mit einer Stromversorgung der Fachanlage 2 verbunden sein.

Fig. 2 zeigt weiter beispielhaft ein Display 24, das mit der Fachanlage 2 verbunden ist. Im gezeigten Fall ist das Display 24 als Teil der Front der Fachanlage vorgesehen, und kann in beispielhaften Ausführungsformen als Touchdisplay ausgebildet sein. Über das Display 24 kann die Steuervorrichtung 22 der Fachanlage somit Kommunikation mit einem Benutzer der Fachanlage ermöglichen. Beispielsweise kann der Benutzer über das Touchdisplay Informationen hinsichtlich einer zu versendenden Sendung an die Steuervorrichtung 22 kommunizieren, die eingerichtet sein kann, in Antwort darauf ein Fach für die zu versendende Sendung zu öffnen. Fig. 2 zeigt weiter schematisch einen Bereich 25, der als Ausgabe eines Druckers (nicht gezeigt) vorgesehen sein kann. Beispielsweise kann die Steuervorrichtung 22 eingerichtet sein, den Drucker anzusteuern, um dem Benutzer eine Quittung auszudrucken, beispielsweise nachdem die zu versendende Sendung in das Fach 21 eingelegt wurde, und das Fach 21 geschlossen wurde.

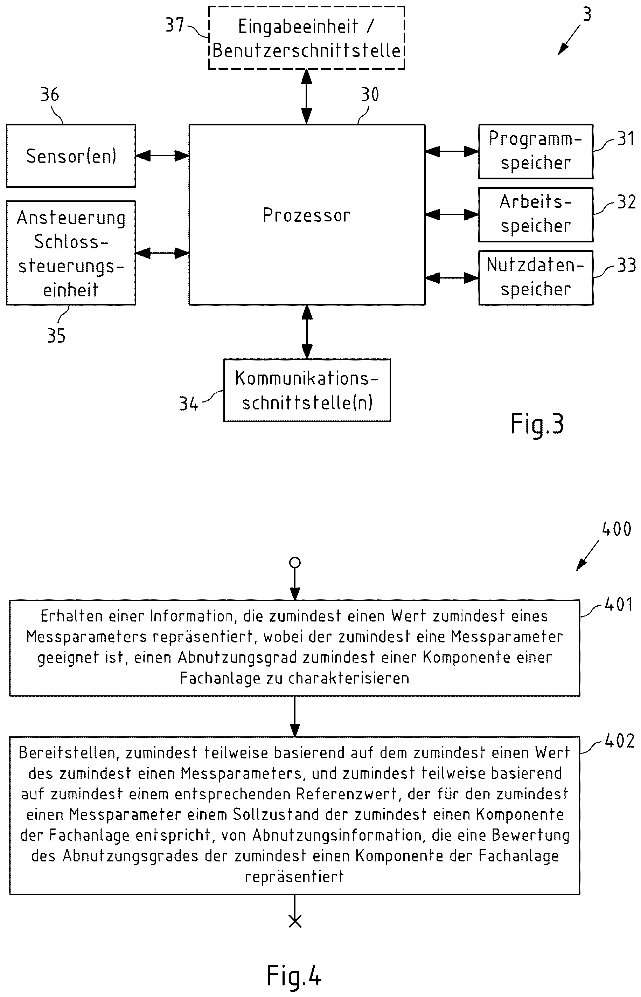

Fig. 3 zeigt eine schematische Darstellung einer beispielhaften Ausführungsform einer Steuervorrichtung 3 einer Fachanlage (z.B. der in Fig. 2 gezeigten Fachanlage 2) gemäß verschiedenen Aspekten der vorliegenden Offenbarung.

Die Steuervorrichtung 3 umfasst beispielhaft einen Prozessor 30, einen Programmspeicher 31, einen Arbeitsspeicher 32, einen Nutzdatenspeicher 33, eine oder mehrere Kommunikationsschnittelle(n) 34, eine oder mehrere Ansteuerungseinheiten 35 für ein oder mehrere Schlösser von entsprechenden Fächern und einen oder mehrere Sensoren 36 (z.B. die in Fig. 1b gezeigten Sensoren 14, 15 des Fachs 1). Eine weitere beispielhafte Komponente der Steuervorrichtung 3 kann eine optionale Eingabeeinheit/Benutzerschnittstelle 37 sein. Der Prozessor 30 führt beispielsweise ein Programm gemäß dem genannten Aspekt der vorliegenden Offenbarung aus, das in dem Programmspeicher 31 gespeichert ist, beispielsweise als Firmware. Arbeitsspeicher 32 dient insbesondere der Speicherung temporärer Daten während des Ablaufs dieses Programms.

Der Nutzdatenspeicher 33 dient der Speicherung von Daten, die bei der Abarbeitung des Programms erforderlich sind. Vorliegend kann es sich dabei beispielsweise um die Information handeln, die den zumindest einen Wert des zumindest einen Messparameters repräsentiert und um den zumindest einen Referenzwert die verwendet werden, um die Abnutzungsinformation bereitzustellen. Auch weitere Daten wie beispielsweise die Identifikationsinformation können beispielsweise im Nutzdatenspeicher 33 gespeichert werden.

Die Kommunikationsschnittstelle(n) 34 umfasst/umfassen beispielsweise eine Schnittstelle zur drahtlosen Kommunikation (z.B. mit einem Mobilgerät), beispielsweise mittels optischer Übertragung und/oder mittels Kommunikation, die auf elektrischen, magnetischen oder elektromagnetischen Signalen oder Feldern beruht, insbesondere auf Bluetooth, NFC und/oder RFID (Radio Frequency Identification). Die Steuervorrichtung 3 ist beispielsweise ferner zur direkten Kommunikation mit einem Backend-Server eingerichtet, verfügt also beispielsweise über eine Kommunikationsschnittstelle, die einen Zugang zum Internet oder zu einem anderen Netz, an das der Backend-Server angeschlossen ist, ermöglicht.

Die Ansteuerungseinheit 35 ermöglicht es, ein Fach der Fachanlage (z.B. das in Fig. 1a und Fig. 1b gezeigte Fach 1) gezielt zu öffnen oder zu entriegeln, um eine Öffnung zu bewirken, insbesondere durch Ansteuerung des Schlosses des Fachs oder einer Schlosssteuereinheit der Fachanlage. Zusätzlich oder alternativ kann die Verriegelung des Fachs bewirkt werden. Die Ansteuerungseinheit 35 ist beispielsweise über eine jeweilige Verdrahtung mit dem Schloss oder der Schlosssteuereinheit der Fachanlage verbunden.

Der zumindest eine Sensor 36 der Steuervorrichtung 3 ist dazu eingerichtet, den zumindest einen Wert des zumindest einen Messparameters zu messen entweder, um einen aktuellen Abnutzungsgrad zu bestimmen, und/oder um Werte zur Bestimmung des zumindest einen Referenzwertes zu bestimmen. Wie beschrieben kann ein Sensor 36 zum Detektieren des zumindest einen Wertes des zumindest einen Messparameters einen oder mehrere geeignete Schwingungssensoren umfassen, die an geeigneten Positionen der Fachanlage angeordnet sind. Alternativ oder zusätzlich kann ein Sensor 36 zum Detektieren des zumindest einen Wertes des zumindest einen Messparameters ein oder mehrere Mikrofone umfassen, die beispielsweise an einer bestimmten Stelle der Fachanlage unabhängig von Fächern der Fachanlage, beispielsweise zusammen mit der Steuervorrichtung der Fachanlage angeordnet sein. Es ist aber auch möglich, dass die Fächer der Fachanlage mit entsprechenden Mikrofonen versehen sind.

Fig. 4 zeigt ein Flussdiagramm einer beispielhaften Ausführungsform eines Verfahrens 400 gemäß dem genannten Aspekt der vorliegenden Offenbarung. Nachfolgend werden die Verfahrensschritte 401 bis 402 beispielhaft mit Bezug auf die Figuren 2 und 3 beschrieben. Dabei wird beispielhaft angenommen, dass die Verfahrensschritte 401 bis 402 von einer Steuervorrichtung der Fachanlage durchgeführt werden. Diese Beschreibung ist aber als beispielhaft zu verstehen, da das Verfahren gemäß dem genannten Aspekt in beispielhaften Ausführungsformen zumindest teilweise von einer Steuervorrichtung der Fachanlage, zumindest teilweise von einem Backend-Server und/oder zumindest teilweise von einem Mobilgerät ausgeführt werden kann.

Schritt 401 umfasst ein Erhalten einer Information, die zumindest einen Wert zumindest eines Messparameters repräsentiert, wobei der zumindest eine Messparameter geeignet ist, einen Abnutzungsgrad zumindest einer Komponente einer Fachanlage zu charakterisieren.

Zum Beispiel steuert die Steuervorrichtung 22 den Sensor 36, beispielsweise ein Mikrofon, das zusammen mit der Steuervorrichtung 22 an der Fachanlage 2 angeordnet ist, um einen Klang aufzunehmen, der erzeugt wird, wenn beispielsweise die in Fig. 2 geöffnet gezeigte Tür des Fachs 21 geschlossen wird. Die Steuervorrichtung 22 kann weiter eingerichtet sein, Messergebnisse von Sensor 36 zu erhalten, und diese geeignet weiterzuverarbeiten, beispielsweise ein geeignetes Audio-Frequenzspektrum des Klangs zu erzeugen. Wie hier detailliert beschrieben hat es sich herausgestellt, dass insbesondere ein solche Audio-Frequenzspektrum in der Weise charakteristisch für beispielsweise einen solchen Vorgang des Schließens des Fachs 21 ist, dass über eine Veränderung dieses Spektrums ausgesagt werden kann, dass die beteiligten beweglichen Komponenten (z.B. Tür 12, Scharniere 16a, 16b und/oder Teile des Schlosses 13a, 13b) einem Verschleiß unterliegen, der eine Wartung oder einen Austausch erfordert.

Beispielsweise über den Vorgang des Öffnens des in Fig. 2 als geöffnet gezeigten Fachs 21, das beispielsweise durch eine Ansteuerung entsprechender Schlosskomponenten 16a, 16b über die Schlosssteuereinheit 35 erfolgt, kann die Steuervorrichtung 22 vor dem Vorgang des Schließens des Fachs 21 entsprechende Identifikationsinformation des Fachs 21 erhalten, so dass die Messung durch Sensor 36 dem entsprechenden Fach, bzw. den bei dem Schließen des Fachs beteiligten Komponenten zugeordnet werden kann.

Schritt 402 umfasst ein Bereitstellen, zumindest teilweise basierend auf dem zumindest einen Wert des zumindest einen Messparameters, und zumindest teilweise basierend auf zumindest einem entsprechenden Referenzwert, der für den zumindest einen Messparameter einem Sollzustand der zumindest einen Komponente der Fachanlage entspricht, von Abnutzungsinformation, die eine Bewertung des Abnutzungsgrades der zumindest einen Komponente der Fachanlage repräsentiert.

Unter dem Bereitstellen der Abnutzungsinformation zumindest teilweise basierend auf dem zumindest einen Wert des zumindest einen Messparameters, und zumindest teilweise basierend auf zumindest einem entsprechenden Referenzwert soll beispielsweise verstanden werden, dass eine Abnutzungsinformation zumindest teilweise basierend auf dem über den Sensor 36 erhaltenen zumindest einen Wert und dem zumindest einen Referenzwert bestimmt wird und anschließend zum Beispiel für eine Anzeige auf dem Display 24 und oder zur Übertragung an den Backend-Server oder das Mobilgerät bereitgestellt wird. Beispielsweise kann die Anzeige und/oder die Übertragung in Antwort auf eine Anfrage, beispielsweise durch Bedienpersonal im Zuge einer Überprüfung der Fachanlage 2 erfolgen. Eine entsprechende Anfrage kann beispielsweise über Bedienelemente der Fachanlage, beispielsweise ein vom Display 24 umfassten Touchdisplay, oder durch Fernkommunikation von einem Mobilgerät zur Anzeige auf einem Display des Mobilgeräts erfolgen.

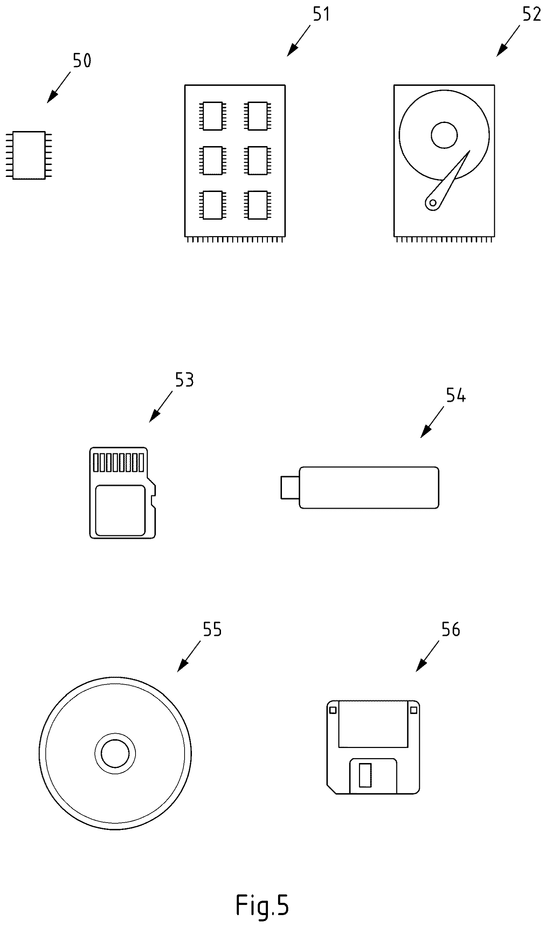

Fig. 5 zeigt beispielhafte Ausführungsformen von Speichermedien, auf denen zum Beispiel ein Computerprogramm gemäß den verschiedenen Aspekten der vorliegenden Offenbarung gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 30 der Fig. 3) sein, beispielsweise ein (nicht-flüchtiger oder flüchtiger) Programmspeicher des Prozessors oder ein Teil davon (z.B. Speicher 31 in Fig. 3). Ausführungsbeispiele eines Speichermediums sind ein Flash-Speicher 50, eine SSD-Festplatte 51, eine magnetische Festplatte 52, eine Speicherkarte 53, ein Memory Stick 55 (z.B. ein USB-Stick), eine CD-ROM oder DVD 55 oder eine Diskette 56.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren, durchgeführt durch zumindest eine Vorrichtung, umfassend:
- Erhalten einer Information, die zumindest einen Wert zumindest eines Messparameters repräsentiert, wobei der zumindest eine Messparameter geeignet ist, einen Abnutzungsgrad zumindest einer Komponente einer Fachanlage zu charakterisieren;
- Bereitstellen, zumindest teilweise basierend auf dem zumindest einen Wert des zumindest einen Messparameters, und zumindest teilweise basierend auf zumindest einem entsprechenden Referenzwert, der für den zumindest einen Messparameter einem Sollzustand der zumindest einen Komponente der Fachanlage entspricht, von Abnutzungsinformation, die eine Bewertung des Abnutzungsgrades der zumindest einen Komponente der Fachanlage repräsentiert.

2. Verfahren nach Anspruch 1, wobei der zumindest eine Messparameter zumindest einen Parameter umfasst, der eine Schwingungseigenschaft der Fachanlage und/oder einen durch eine Bewegung der zumindest einen Komponente ausgelösten Klang repräsentiert.

3. Verfahren nach einem der Ansprüche 1 oder 2, weiter umfassend:
- Erhalten von Identifikationsinformation, die mit der zumindest einen Komponente der Fachanlage assoziiert ist, wobei der Schritt des Bereitstellens weiter zumindest teilweise auf der Identifikationsinformation basiert.

4. Verfahren nach Anspruch 3, wobei die Identifikationsinformation mit einem entsprechenden Fach einer Mehrzahl von Fächern der Fachanlage assoziiert ist.

5. Verfahren nach Anspruch 4, wobei das Verfahren weiter umfasst:
- Bewirken des Öffnens des entsprechenden Fachs in Antwort auf das Erhalten der Identifikationsinformation.

6. Verfahren nach einem der vorangehenden Ansprüche, wobei die zumindest eine Komponente zumindest ein Bauteil und/oder eine Baugruppe der Fachanlage umfasst, welches und/oder welche zumindest einen beweglichen Bestandteil aufweisen.

7. Verfahren nach einem der vorangehenden Ansprüche, wobei die zumindest eine Komponente eine oder mehrere der folgenden Komponenten der Fachanlage umfasst:
• eine Tür eines Fachs einer Mehrzahl von Fächern der Fachanlage;
• einen Schließmechanismus eines Fachs einer Mehrzahl von Fächern der Fachanlage;
• zumindest ein Scharnier eines Fachs einer Mehrzahl von Fächern der Fachanlage;
• einen Drucker, der von der Fachanlage umfasst ist;
• einen Lüfter, der von der Fachanlage umfasst ist;
• zumindest ein Bedienelement, insbesondere zumindest eine Taste und/oder ein Schalter, zum Bedienen einer Steuervorrichtung der Fachanlage.

8. Verfahren nach einem der vorangehenden Ansprüche, weiter umfassend:
- Erhalten des zumindest einen Referenzwertes, wobei das Erhalten des zumindest einen Referenzwertes umfasst:
- Anregen einer Schwingung der Fachanlage und/oder Erzeugen eines Klanges durch zumindest eine Komponente der Fachanlage;
- In Antwort auf das Anregen der Schwingung der Fachanlage und/oder das Erzeugen des Klangs durch die zumindest eine Komponente der Fachanlage, Erhalten einer Information, die zumindest einen Wert des zumindest einen Messparameters repräsentiert;
- Bestimmen des zumindest einen Referenzwertes basierend auf der erhaltenen Information.

9. Verfahren nach Anspruch 8, wobei die Anregung der Schwingung der Fachanlage und/oder das Erzeugen des Klangs durch die zumindest eine Komponente der Fachanlage erfolgt durch:
- einen externen Aktuator und/oder
- ein Öffnen und/oder Schließen von zumindest einem Fach der Fachanlage.

10. Verfahren nach Anspruch 8, wobei die Anregung der Schwingung der Fachanlage und/oder das Erzeugen des Klangs durch die zumindest eine Komponente der Fachanlage erfolgt durch:
- Sequentielles Öffnen und/oder Schließen von Fächern zumindest einer Untermenge aller Fächer der Fachanlage.

11. Verfahren nach Anspruch 10, wobei das Erhalten des zumindest einen Referenzwertes weiter umfasst:
- Erhalten der Information, die den zumindest einen Wert des zumindest einen Messparameters repräsentiert, für jeden Vorgang des Öffnens und/oder Schließens eines Fachs zumindest aus einer Untermenge aller Fächer der Fachanlage; und
- Bestimmen des zumindest einen Referenzwertes basierend auf der Information, die für jeden Vorgang des Öffnens und/oder Schließens eines Fachs aus zumindest der Untermenge aller Fächer der Fachanlage erhalten wurde.

12. Verfahren nach einem der vorangehenden Ansprüche 8 bis 11, weiter umfassend zumindest eines von:
- Feststellen, dass das zumindest eine Fach der Fächer der Fachanlage ungenutzt ist;
- Feststellen, dass zumindest alle Fächer der Untermenge aller Fächer der Fachanlage ungenutzt sind;
- Feststellen, dass alle Fächer der Fachanlage ungenutzt sind.

13. Verfahren nach Anspruch 12, wobei das Feststellen umfasst:
- Erhalten einer Information, die einen Messwert zumindest eines Sensors repräsentiert, der mit zumindest einem Fach der Fachanlage assoziiert ist.

14. Verfahren nach einem der vorangehenden Ansprüche, wobei das Bereitstellen der Abnutzungsinformation umfasst:
- Vergleichen des zumindest einen Wertes des zumindest einen Messparameters mit dem zumindest einen entsprechenden Referenzwert, und
- Bestimmen der Abnutzungsinformation basierend auf einem Ergebnis des Vergleichs.

15. Verfahren nach einem der vorangehenden Ansprüche 1 bis 13, wobei das Bereitstellen der Abnutzungsinformation umfasst:
- Verwenden zumindest des zumindest einen Referenzwertes, um ein auf künstlicher Intelligenz basierendes Rechenmodul, insbesondere ein künstliches neuronales Netz, zu trainieren; und
- Verwenden des auf künstlicher Intelligenz basierenden Rechenmoduls, um basierend auf dem zumindest einen Wert des zumindest einen Messparameters, der dem aktuellen Abnutzungsgrad der zumindest einen Komponente der Fachanlage entspricht, die Abnutzungsinformation zu bestimmen.

16. Verfahren nach einem der vorangehenden Ansprüche, wobei das Erhalten der Information, die den zumindest einen Wert des zumindest einen Messparameters repräsentiert, umfasst:
- Erfassen des zumindest einen Wertes des Messparameters durch zumindest einen Sensor, der an der Fachanlage angeordnet ist, wobei der Sensor eingerichtet ist, zumindest eine Schwingung der Fachanlage zu detektieren und/oder zumindest einen Parameter, der einen Klang repräsentiert, der durch eine Bewegung der zumindest einen Komponente ausgelöst wird.

17. Verfahren nach einem der vorangehenden Ansprüche, weiter umfassend:
- Ausgeben der Abnutzungsinformation.

18. Verfahren nach einem der vorangehenden Ansprüche, weiter umfassend:
- Automatisches Ausgeben der Abnutzungsinformation, wenn eine Differenz zwischen dem zumindest einen Wert des zumindest einen Messparameters und dem zumindest einen Referenzwert ein vorbestimmtes Kriterium erfüllt.

19. Computerprogramm, umfassend Programmanweisungen, die einen Prozessor zur Ausführung und/oder einem Steuern des Verfahrens gemäß einem der Ansprüche 1 bis 18 verlassen, wenn das Computerprogramm auf dem Prozessor läuft.

20. Vorrichtung, eingerichtet zu einer Ausführung und/oder zu einem Steuern des Verfahrens gemäß einem der Ansprüche 1 bis 18 oder umfassend jeweilige Mittel zur Ausführung und/oder zur Steuerung der Schritte des Verfahrens gemäß einem der Ansprüche 1 bis 18.

21. Vorrichtung gemäß Anspruch 20, wobei die Vorrichtung eine Steuervorrichtung der Fachanlage, ein Backend-Server, und/oder ein Mobilgerät ist, oder eine Komponente davon.
